# EUROPÄISCHE PATENTSCHRIFT

(11) **EP 3 424 330 B1**
(45) Veröffentlichungstag und Bekanntmachung des Hinweises auf die Patenterteilung: **06.01.2021**
(21) Anmeldenummer: 17179345.8
(22) Anmeldetag: 03.07.2017
(51) Int. Cl.: A22C 15/00

(54) **AUFHÄNGEEINHEIT MIT SCHRÄG GESTELLTER FÜHRUNGSSCHIENE**
SUSPENSION UNIT WITH INCLINED GUIDE RAIL
UNITÉ DE SUSPENSION COMPRENANT UN RAIL DE GUIDAGE OBLIQUE

(43) Veröffentlichungstag der Anmeldung: 09.01.2019
(60) Teilanmeldung: 20201792.7
(73) Patentinhaber: Albert Handtmann Maschinenfabrik GmbH & Co. KG, 88400 Biberach (DE)
(72) Erfinder: Merk, Jochen, 88416 Ochsenhausen (DE); Baechtle, Manfred, 88433 Schemmerhofen (DE); Schliesser, Gerhard, 88489 Wain (DE); Winghart, Robert, 89613 Oberstadion (DE); Strohm, Kurt, 88448 Attenweiler (DE); Osswald, Florian, 89079 Ulm/ Einsingen (DE)
(74) Vertreter: Grünecker Patent- und Rechtsanwälte PartG mbB

(56) Entgegenhaltungen:
- EP-A1- 1 172 035
- DE-A1-102011 005 201
- DE-U1-202009 015 265

## Beschreibung

Die Erfindung betrifft eine Aufhängeeinheit sowie ein Verfahren zum Aufnehmen und Transportieren von Wurstschlaufen gemäß dem Oberbegriff der Ansprüche 1 und 16.

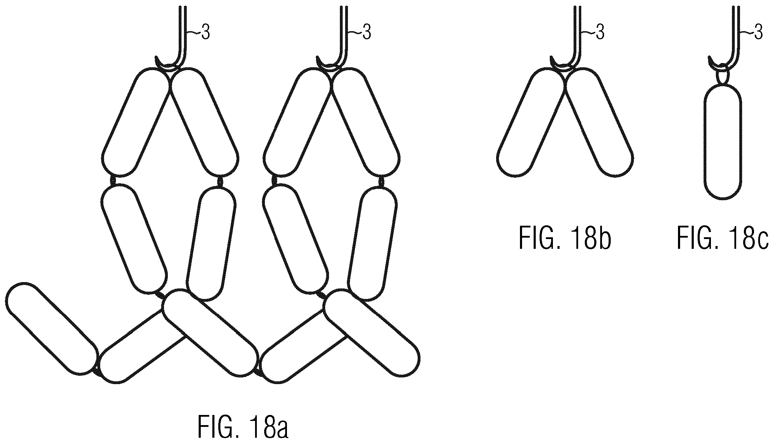

Bei der Herstellung von Würsten bzw. Wurstprodukten durch Füll- und Portioniersysteme werden Wursthüllen, z. B. Natur-, Alginat-, Kunst- oder Kollagendärme, mittels einer Füllmaschine, insbesondere einer Vakuumfüllmaschine mit pastöser Masse gefüllt. Durch das Abdrehen des gefüllten Darms ergibt sich in der Abdrehlinie eine Wurstkette aus zusammenhängenden Einzelwürsten bzw. Portionen. Bei der Übergabe der Wurstkette auf eine Aufhängeeinheit werden vorgegebene Abteilstellen von Haken erfasst, sodass sich auf der Aufhängeeinheit aus der Wurstkette mehrere Wurstschleifen bilden (siehe z. B. Fig. 18a). Eine solche Schleife besteht aus mehreren Würsten (3-Loop, 4-Loop, in Fig. 18a z. B. 6-Loop). Es ist aber auch möglich, die Würste paarweise aufzuhängen (Fig. 18b) oder eine oder mehrere Einzelwürste beispielsweise an einer Schlaufe an einem Haken aufzuhängen (Fig. 18c).

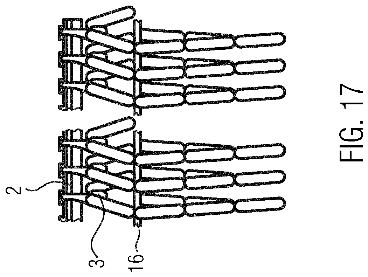

Es können mehrere Haken mit jeweiligen Würsten in sogenannten Wurstgruppen zusammengefasst werden. Bei der Produktverarbeitung an der Aufhängeeinheit müssen die Bediener die Gruppenübergänge (vom Ende des einen Rauchstocks 16 zum Anfang des nächsten Rauchstocks 16) z. B. trennen und z. B. offene Portionsenden (unabhängig von der Darmart) verschließen. Bei der manuellen Produktentnahme aus der Aufhängeeinheit müssen die Bediener einen Rauchstock 16 in die Schleifen einer Gruppe einführen, bzw. einfädeln, wie dies beispielsweise in Fig. 17 dargestellt ist und anschließend den mit Wurstschleifen behängten Rauchstock 16 aus den Haken für die weitere Verarbeitung entnehmen.

Da bei den gängigen Aufhängeeinheiten die Würste von einer Füllmaschine bzw. einer Abdrehlinie antransportiert werden, befinden sich die Haken der Aufhängevorrichtung auf relativ niedrigem Höhenniveau. Herkömmliche Füllmaschinen und Abdrehlinien weisen beispielsweise eine Füllhöhe von etwa 1000 mm bis 1250 mm auf. Dies bringt mit sich, dass ein großer Bediener sich zur Produktverarbeitung zu den Würsten hin nach unten bücken muss, was aus ergonomischen Gesichtspunkten nicht akzeptabel ist.

Im Stand der Technik gibt es bereits Ansätze, das Niveau zu erhöhen. Beispielsweise wird in der EP 1 172 035 vorgeschlagen, die Würste über ein Transportband mit Niveauerhöhung anzuheben und erst dann an die Aufhängeeinheit zu übergeben. Eine entsprechende Lösung ist aufwendig. Ein individuelles Einstellen der Arbeitshöhe ist nicht möglich.

Aus der DE 20 2009 015 265 U1 ist ebenfalls bereits eine Aufhängeeinheit zum Aufnehmen und Transportieren von Wurstschlaufen mit umlaufenden Haken mit einer länglichen Vorderseite und einer länglichen Rückseite bekannt. In dieser Druckschrift weist ein erster Abschnitt der Führungsschiene auf der Vorderseite eine Steigung auf, sodass die Vorderseite auf einem höheren Niveau liegt, als die Rückseite.

Eine entsprechende Vorrichtung ist auch aus der DE 10 2011 005 201 A1 bekannt.

Hiervon ausgehend liegt der vorliegenden Erfindung die Aufgabe zugrunde, eine verbesserte Aufhängeeinheit und ein Verfahren bereitzustellen, die ermöglichen, dass die Arbeitshöhe an der Aufhängeeinheit zur Produktverarbeitung für alle Bedienergrößen optimal ist.

Erfindungsgemäß wird diese Aufgabe durch die Merkmale der Ansprüche 1 und 16 gelöst.

Die erfindungsgemäße Aufhängeeinheit zum Aufnehmen und Transportieren von Wurstschlaufen umfasst eine Führungsschiene mit mehreren umlaufenden Haken. Die Führungsschiene weist eine längliche Vorderseite und eine gegenüberliegende Rückseite auf. Auf diesen Seiten befinden sich die Arbeitsbereiche. Erfindungsgemäß liegt nun die geschlossene Führungsschiene nicht wie im Stand der Technik in einer horizontalen Ebene, sondern ist derart zu einer horizontalen Ebene schräg gestellt, dass die Vorderseite auf einem höheren Niveau liegt als die Rückseite.

Dies bringt den Vorteil mit sich, dass durch einfaches Schrägstellen der Führungsschiene bzw. der Umlaufbahn beispielsweise an der erhöhten Vorderseite eine Produktbearbeitung, wie beispielsweise Durchtrennen von Wurstketten oder Verschließen von offenen Wurstenden erfolgen kann, ohne dass sich die Bedienperson bücken muss. Auf der gegenüberliegenden Seite, die auf einem niedrigeren Niveau liegt, kann dann auf einfache Art und Weise eine Wurstgruppe mit Hilfe eines Rauchstocks entnommen werden. Für diesen Arbeitsschritt ist eine niedrige Arbeitshöhe akzeptabel. Somit verbessert sich die Ergonomie für den Bediener wesentlich. Somit kann in der Abdrehlinie ein gerades, d. h. horizontal ausgerichtetes Transportband zum Anfördern der Würste verwendet werden, was einerseits die Leistung steigert und Kosten senkt. Das bedeutet, dass die Erhöhung des Arbeitsniveaus nicht im Bereich der Abdrehlinie stattfindet, sondern innerhalb der Aufhängeeinheit realisiert wird. Die Erfindung ermöglicht auch, dass die Länge des Arbeitsbereichs an der Rückseite nicht und auf der Vorderseite nur unwesentlich eingeschränkt wird. Somit ergibt sich ein sehr hoher Ausnutzungsgrad der Länge der Aufhängeeinheit. Dem Bediener steht also ein großer Bereich der Länge als Arbeitsbereich zur Verfügung, da der Höhenunterschied bei der Hakenbewegung von der Vorderseite auf die Rückseite, also quer zur Füllrichtung, umgesetzt wird. An der Führungsschiene kann ein Antriebselement, insbesondere ein Antriebsriemen angeordnet sein, das zusammen mit der Führungsschiene schräg gestellt ist. Somit kann auf einfache und kostengünstige Art und Weise ein umlaufendes Antriebselement verwendet werden, wie beispielsweise ein Zahnriemen, beispielsweise mit Hakenabstand in einem vorgegebenen Raster (z. B. 5 mm-Raster für eine optimale Rauchstockauslastung). Das Antriebselement bewegt sich dann ebenfalls in schräg gestellter Ebene. Eine solche Lösung ist besonders einfach und kostengünstig.

Die Führungsschiene kann fest in einer schräg gestellten Position montiert sein. Gemäß der Erfindung ist die Führungsschiene um eine Drehachse D und um einen Winkel α verschwenkbar ist, also stufenlos verstellbar. Dabei ist die Führungsschiene insbesondere drehbar auf einem Fahrgestell gelagert. Eine solche Anordnung ist besonders einfach und kostengünstig zu realisieren, und erfordert im Vergleich zur herkömmlichen Aufhängeeinheit lediglich einen Dreh- und Feststellmechanismus. Die Drehachse ist vorzugsweise im Wesentlichen parallel (wobei "im Wesentlichen" mit einer Abweichung von <= + - 10° bedeutet) zur Längsachse der Aufhängeeinheit ausgerichtet, d. h., im Wesentlichen parallel zur Längsachse des Fahrgestells. Das heißt, dass die Drehachse insbesondere im Wesentlichen parallel zur Transportrichtung TR verläuft, die wiederum der Füllrichtung der Füllmaschine und der Transportrichtung der Transportbänder der Abdrehlinie entspricht.

Somit kann das Höhenniveau der Vorderseite der Führungsschiene stufenlos oder in diskreten Abständen eingestellt, d. h. arretiert werden. Dies bringt den Vorteil mit sich, dass in Abhängigkeit des Schwenkwinkels α die Haken in Füllrichtung, d. h. auf der Vorderseite der Aufhängeeinheit, sich auf einem höheren Arbeitsniveau und entgegen der Füllrichtung, d. h. auf der Rückseite auf einem tieferen Arbeitsniveau oder im wesentlichen gleichbleibenden Arbeitsniveau bewegen können. Durch Variation des Schwenkwinkels kann die Höhe auf der Vorderseite exakt an die Bedienergröße ergonomisch optimal angepasst werden.

Der Schwenkwinkel α liegt beispielsweise, ausgehend von einer horizontalen Ausrichtung, in einem Bereich zwischen 0° und 85°, vorzugsweise in einem Bereich von 5° - 30°.

Die Führungsschiene weist an einem ersten Ende einen Umlenkbereich auf, in dem die Haken von 95° - 180 ° vorzugsweise 160° - 180 °, insbesondere um 180° umgelenkt werden, wobei die Haken im Umlenkbereich die Abteilstellen der Wurstketten aufnehmen. Dieser Umlenkwinkelbereich ist besonders vorteilhaft, da dann die Wurstketten exakt abgenommen werden können und sich die Wurstschlaufen innerhalb des Winkels 95° - 180° vollständig ausbilden können.

Der Abstand b₁ eines Führungsschienenabschnitts auf der Vorderseite unmittelbar vor dem Umlenkbereich von einem Führungsschienenabschnitt auf der Rückseite unmittelbar nach dem Umlenkbereich ist kleiner als der Abstand b₂ in einem in Transportrichtung TR nachfolgenden Bereich, wobei insbesondere der Abstand b₁ in einem Bereich von 50 mm bis 100 mm liegt und der Abstand b₂ in dem nachfolgenden Bereich bis auf 300 mm bis 600 mm zunimmt.

Die Führungsschiene und/ oder zumindest jeweilige Führungsschienenabschnitte (im Sinne von Teilbereichen der Führungsschiene auf der Vorder und Rückseite) auf der Vorderseite und Rückseite laufen unter einem spitzen Winkel zwischen 5° - 85°, vorzugsweise zwischen 15° und 45° auf den Umlenkbereich zu derart, dass sich der Abstand b₁ auf einen Abstand b₂ erweitert.

Dabei ist z. B. auf der Vorderseite nach dem Umlenkbereich ein schräg zur Transportrichtung verlaufender Abschnitt vorgesehen, derart, dass sich der Abstand b₁ auf einen Abstand b₂ erweitert. Insbesondere kann auch ein konkav gekrümmter Abschnitt nach dem Umlenkbereich angeordnet sein. Durch einen gekrümmten Abschnitt können die Haken auf ideale Art und Weise geführt werden, wenn die Haken um 180° umgelenkt wurden. Der gekrümmte Abschnitt kann sich direkt an den Umlenkbereich anschließen, es ist aber auch möglich, dass auf der Vorderseite der Führungsschienen ein Abschnitt nach dem Umlenkbereich zunächst parallel verläuft und sich dann ein konkaver Abschnitt anschließt.

Vorteilhafterweise sind an dem konkav gekrümmten Abschnitt Rückhalteelemente, insbesondere Rückhalteleisten (z. B. L-förmig) vorgesehen, die das umlaufende Antriebselement an der Führungsschiene halten. Das Antriebselement würde sonst wie eine Sehne vom Anfang bis zum Ende des konkav gekrümmten Abschnitts abstehen.

Vorteilhafterweise liegt die Drehachse in einer Ebene, die von einem Vektor aufgespannt wird, der sich im Wesentlichen parallel zur Transportrichtung TR erstreckt und einem Vektor, der sich senkrecht zur Oberseite der geschlossenen Führungsschiene (d. h. einer virtuellen Fläche, die von der Oberseite der Führungsschienen begrenzt wird) erstreckt. Dabei ist dieser Vektor näher an der Rückseite der Führungsschiene als an der Vorderseite der Führungsschiene angeordnet. Dadurch, dass die Drehachse näher an der Rückseite liegt (z. B. auch mit ihr zusammenfällt oder direkt unter ihr liegt), ergibt sich der Vorteil, dass die Höhe der Führungsschiene an der Vorderseite beliebig eingestellt werden kann, während die Höhe auf der Rückseite im Wesentlichen konstant gehalten werden kann oder sich nur geringfügig ändert. Somit kommt die Führungsschiene auf der Rückseite, an der beispielsweise eine Wurstgruppe mit einem Rauchstock entnommen wird, nicht zu tief zu liegen, sodass die Wurstgruppen bequem entnommen werden können. Vorteilhafterweise erstreckt sich der Vektor senkrecht durch eine Oberseite der Führungsschiene im Umlenkbereich. Bei einer solchen Drehachse ändert sich die Übernahmeposition der Haken nur unwesentlich.

Der Abstand der Drehachse D zu einer virtuellen Fläche bzw. Ebene die durch die Unterkanten der Führungsschiene aufgespannt wird in einem Bereich von 10 mm bis 150 mm, vorzugsweise 30 mm bis 70 mm liegt.

Vorteilhafterweise liegt der Abstand K der Hakenspitze eines im Wesentlichen L-förmigen Hakens zur Drehachse in einem Bereich <= 50 mm. Wenn die Drehachse möglichst nah an der Hakenspitze in einer Übernahmeposition im Umlenkbereich angeordnet ist, kann gewährleistet werden, dass unabhängig von der Höheneinstellung der Führungsschiene, d. h. unabhängig von der Schwenkbewegung, die Hakenspitze im Wesentlichen gleich positioniert ist.

Gemäß einem bevorzugten Ausführungsbeispiel umfasst die Vorrichtung eine Einrichtung, die die Position der Haken zusätzlich ändert, d. h. also, zusätzlich zu dem Verschwenkmechanismus der Führungsschiene. Die Einrichtung kann beispielsweise die Haken zusätzlich um einen Winkel von 5° bis 30° verschwenken. Das bedeutet z. B., die Haken bei einer um einen Winkel α verschränkten Position der Führungsschiene in eine Position zu bringen, die im Wesentlichen einer Hakenposition bei α = 0 ± 10° entspricht. Somit kann eine ausreichende Spreizung der Wurstschlaufen in den Haken gewährleistet werden, was zur Abnahme mit einem Rauchstock vorteilhaft ist.

Die Haken sind gemäß einem bevorzugten Ausführungsbeispiel drehbar an der Führungsschiene gelagert.

Das bedeutet, dass beispielsweise auf der tiefer liegenden Rückseite die einteiligen Haken nach oben verschwenkbar sind, um eine zur Abnahme der Wurstschlaufen passende Position zu haben. Die Hakenposition kann aber auch beispielsweise an der tiefer liegenden Rückseite derart geändert werden, dass die Haken selbst beispielsweise ein Gelenk aufweisen und die Hakenabschnitte um eine Drehachse bewegt werden, derart, dass sich die Hakenposition verändert.

Es ist insbesondere möglich, dass die Einrichtung eine Zusatzführung aufweist, die bei verschwenkter Führungsbahn gegen einen Führungsbereich (z. B. am oberen Endbereich der Haken) der Haken drücken kann, derart, dass die Haken auf der Rückseite der Führungsschiene nach oben verschwenkbar sind. Es wäre zusätzlich oder alternativ auch möglich, die durch das Verschwenken schräggestellten Haken auf der Vorderseite nach unten zu verschwenken um eine korrekte Ausrichtung der Haken wiederherzustellen, bzw. deren Position zu korrigieren.

Vorteilhafterweise drückt die Zusatzführung automatisch gegen den Führungsbereich der Haken, wenn die Führungsbahn verschwenkt wird, d. h., dass die Führungsschiene mechanisch mit der Zusatzführung gekoppelt ist.

Eine weitere Möglichkeit, die Hakenposition bei verschwenkter Führungsbahn zu korrigieren, ist, dass die Führungsschiene zumindest abschnittsweise verdrillt wird, insbesondere um einen Winkel γ, wobei vorzugsweise γ = α ± 10°. Bei stufenloser Verstellung der Höhe der Vorderseite der Führungsschiene kann beispielsweise ein vorbestimmter Wert auf der Grundlage des maximalen Verschwenkwinkels α sowie α = 0 für den Verdrillwinkel γ ermittelt werden und die Führungsschiene werksseitig verdrillt werden, sodass die Hakenposition für alle Winkel α im möglichen Schwenkbereich akzeptabel ist. Somit kann eine Führungsschiene, deren Vorderseite bei horizontaler Ausrichtung der Führungsschiene vertikal oder unter einem vorbestimmten Winkel zur Vertikalen ausgerichtet ist durch die Verdrillung auch bei Verschwenkung der Führungsbahn unter einem Winkel α wieder in eine passende Position gebracht werden. Wird beispielsweise die Führungsbahn an einem Endbereich der Vorder- oder Rückseite verdrillt, wird sie am jeweiligen anderen Endbereich in eine Richtung zurück verdrillt.

Beim erfindungsgemäßen Verfahren werden Wurstschlaufen in einem Umlenkbereich der Aufhängeeinheit von den Haken übernommen und dann gleichzeitig in Transportrichtung nach oben und quer zur Transportrichtung bewegt. Dies bringt den Vorteil mit sich, dass an der Vorderseite ein großer Arbeitsbereich zur Verfügung gestellt werden kann. Gemäß der vorliegenden Erfindung kann die Führungsschiene um eine Drehachse D um einen Winkel α verschwenkt werden, wodurch das Höhenniveau, auf dem die Führungsschiene auf der Vorderseite liegt, eingestellt und fixiert werden kann.

Bei der Erfindung kann dann auf der erhöhten Vorderseite der Führungsschiene eine Produktverarbeitung und/ oder eine Produktentnahme durch einen Rauchstock stattfinden und auf der hinteren Rückseite die Entnahme der Wurstschlaufen durch einen Rauchstock erfolgen.

Die Erfindung betrifft auch eine Füllmaschine mit einer Abdrehlinie sowie einer Aufhängeeinheit nach mindestens einem der Ansprüche 1 bis 15. Die Aufhängeeinheit ist dabei derart in Transportrichtung ausgerichtet, dass die Transportrichtung einer Transporteinrichtung der Abdrehlinie oder Füllmaschine entspricht, d. h. wiederum der Füllrichtung. Dabei kann der Umlenkbereich der Aufhängeeinheit in Transportrichtung direkt hinter der Transporteinrichtung der Abdrehlinie angeordnet sein.

Die vorliegende Erfindung wird nachfolgend unter Bezugnahme der folgenden Figuren näher erläutert:
- Fig. 1: zeigt schematisch eine Abdrehlinie sowie eine Aufhängeeinheit gemäß der vorliegenden Erfindung.
- Fig. 2: zeigt grob schematisch die in Fig. 1 gezeigte Aufhängeeinheit mit schräg gestellter Führungsschiene.
- Fig. 3: zeigt grob schematisch eine Aufsicht auf die in Fig. 1 und 2 gezeigte Aufhängeeinheit.
- Fig. 4a: zeigt einen vergrößerten Ausschnitt eines Bereichs der in Fig. 3 gezeigten Aufhängeeinheit, der den Umlenkbereich aufweist.
- Fig. 4b: zeigt einen Teil des in Fig. 4a gezeigten Umlenkbereiches in Transportrichtung.
- Fig. 5: zeigt grob schematisch eine Alternative zu dem in Fig. 4 gezeigten Umlenkbereich.
- Fig. 6: zeigt eine Aufhängeeinheit mit horizontal verschwenkter Führungsschiene.
- Fig. 7: zeigt die in Fig. 6 gezeigte Führungsschiene mit Schrägstellung.
- Fig. 8: zeigt eine weitere Ausführungsform der Führungsschiene mit einem verdrillten Führungsschienenabschnitt.
- Fig. 9: zeigt einen vergrößerten Bereich des verdrillten Führungsschienenabschnitts der Fig. 8.
- Fig. 10: zeigt in perspektivischer Darstellung ein weiteres Ausführungsbeispiel in perspektivischer Darstellung mit einer Zusatzführung zum Verstellen der Haken.
- Fig. 11: ist eine Vergrößerung des Bereichs A in Fig. 10.
- Fig. 12: ist eine Vergrößerung des Bereichs B der Fig. 10.
- Fig. 13: ist eine Ansicht in Füllrichtung mit schräg gestellter Führungsschiene des in Fig. 10 gezeigten Ausführungsbeispiels mit einem Winkel α = 10°.
- Fig. 14: zeigt eine Schnittansicht des in Fig. 13 gezeigten Hakens.
- Fig. 15: entspricht dem in Fig. 13 gezeigten Ausführungsbeispiel mit einem Winkel α von 20°.
- Fig. 16: ist eine Schnittansicht des in Fig. 15 gezeigten Hakens.
- Fig. 17: zeigt die Rückseite einer Aufhängeeinheit, bei der die Wurstschlaufen einer wurstgruppe mit einem Rauchstock aufgenommen werden.
- Fig. 18a: zeigt Wurstschlaufen auf Haken.
- Fig. 18b: zeigt ein mit einer Schlaufe verbundenes Wurstpaar.
- Fig. 18c: zeigt eine an einer Schlaufe auf einem Haken gezeigte Einzelwurst.
- Fig. 19: zeigt grob schematisch einen Querschnitt eines Hakens.

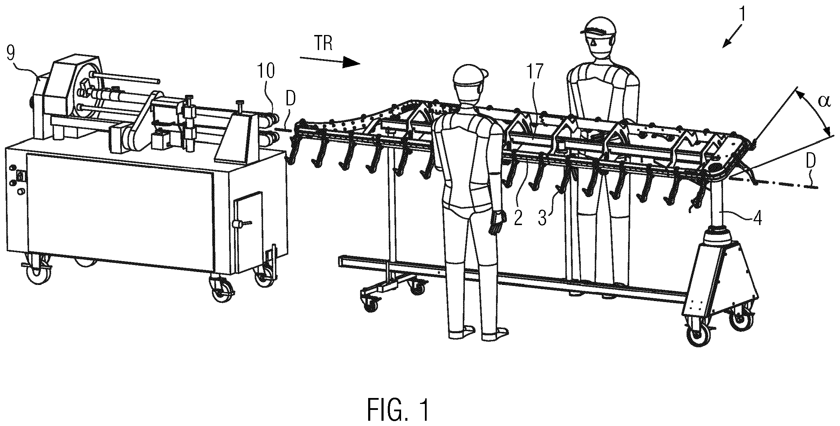

Fig. 1 zeigt eine Aufhängeeinheit 1 gemäß einem Ausführungsbeispiel der vorliegenden Erfindung, die in Transportrichtung TR hinter einer Abdrehlinie 9 angeordnet ist. Die Abdrehlinie 9, die mit einer nicht dargestellten Füllmaschine, insbesondere Vakuumfüllmaschine, verbunden ist, kann die mit pastöser Masse befüllte Wursthülle abteilen, insbesondere abdrehen, sodass sich eine Wurstkette aus zusammenhängenden Einzelportionen ergibt.

Bei der Übergabe der Wurstkette auf die Aufhängeeinheit 1 werden vorgegebene Abteilstellen von Haken 3 erfasst, sodass sich auf der Aufhängeeinheit aus der Wurstkette mehrere Wurstschleifen bilden können. Eine Schleife besteht aus mindestens einer oder mehreren Portionen (2-Loop, 3-Loop, 4-Loop), wie beispielsweise in Fig. 18a, b, c dargestellt ist. Die Haken 3 laufen um eine umlaufende Führungsschiene 2 um.

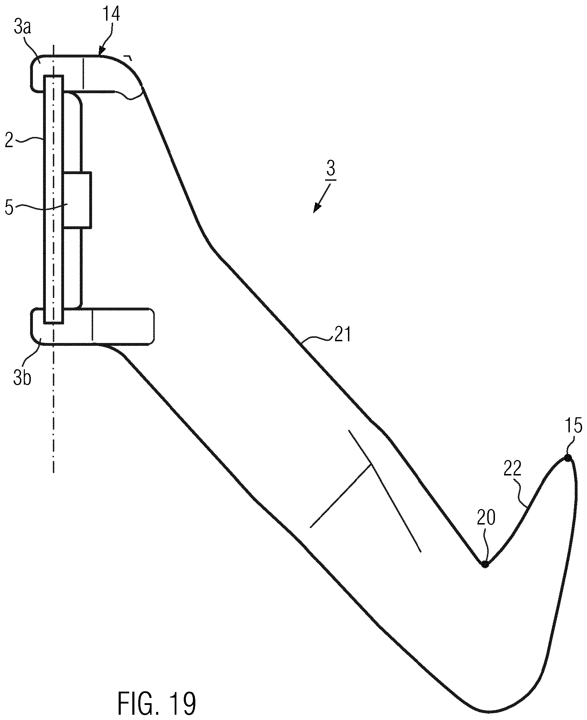

Fig. 19 zeigt beispielsweise einen entsprechenden Haken 3, der beispielsweise im Wesentlichen L-förmig ausgebildet ist, und der eine Hakenspitze 15 sowie einen Einschnitt 20 zwischen den beiden Armen 21, 22 aufweist, sowie einen Führungsbereich 14 am oberen Ende des Arms 21, wobei beispielsweise bei dem in Fig. 19 gezeigten Ausführungsbeispiel der Führungsbereich 14 am oberen und unteren Bereich der Führungsschiene 2 geführt wird. Die Führungsschiene 2 läuft dabei z. B. in einer oberen und unteren Führungsnut. Die Haken werden von einem Antriebselement 5, beispielsweise einem umlaufenden Riemen, der in den Haken 3 eingreift, angetrieben. Während die Führungsschiene 2 ortsfest ist, wird das Antriebselement 5 von einem nicht dargestellten Antrieb umlaufend angetrieben. Das Antriebselement 5 kann beispielsweise in Form eines Zahnriemens realisiert sein, beispielsweise mit einem Hakenabstand in einem 3 mm bis 15 mm-Raster, insbesondere 5 mm-Raster für eine optimale Rauchstockauslastung.

Gemäß der vorliegenden Erfindung ist die geschlossene Führungsschiene 2 relativ zu einer Horizontalebene um einen Schwenkwinkel α schräg gestellt. Es ist möglich, dass die Führungsschiene auf ihrer Halterung 17 in einer entsprechenden Position fest an einem Fahrgestell 4 oder Unterteil der Aufhängeeinheit montiert ist und die Position nicht weiter verstellbar ist. Vorteilhafterweise ist aber die Führungsschiene 2 um eine Drehachse D um den Winkel α verschwenkbar, insbesondere drehbar auf einem Fahrgestell 4 gelagert, wobei die Drehachse D parallel zur Längsachse der Aufhängeeinheit verläuft, d. h. parallel zur Transportrichtung TR der Transporteinrichtung der Abdrehlinie bzw. der Transportrichtung im Arbeitsbereich auf der Vorder- und Rückseite der Aufhängeeinheit und auch parallel zur Füllrichtung der Füllmaschine ist. Das Fahrgestell 4 weist beispielsweise eine Höhe von 900 mm bis 1200 mm auf.

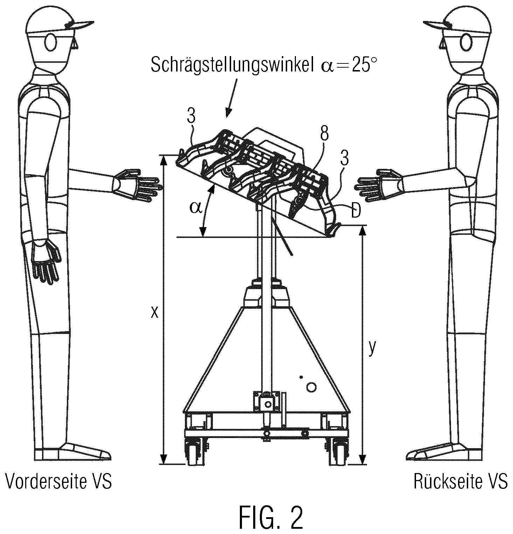

Durch das Verschwenken der Führungsschiene 2 ergibt sich, wie insbesondere aus Fig. 2 hervorgeht, dass die Arbeitshöhe X auf der Vorderseite der Aufhängeeinheit auf einem höheren Niveau liegt, als die Arbeitshöhe Y auf der Rückseite der Aufhängeeinheit 1. Die Arbeitshöhe X, d. h. der Abstand zwischen Boden und dem Einschnitt 20 des Hakens kann beispielsweise in einem Bereich von 900 mm bis 1500 mm, insbesondere 1000 mm bis 1200 mm eingestellt werden, wobei die Arbeitshöhe Y auf der Rückseite dann entsprechend niedriger ist. Der Winkel α kann in einem Bereich von 0° bis 85° liegen. Somit kann die Arbeitshöhe durch Einstellen des Schwenkwinkels α ergonomisch auf die Bedienergröße eingestellt werden. Es ist dann ergonomisch vorteilhaft, wenn der Bediener auf der Vorderseite der Aufhängeeinheit bzw. der Führungsschiene 2 eine Produktverarbeitung vornimmt, z. B. Trennen und Verschließen von Wurstportionen. Der Bediener muss dann keine gebückte Haltung mehr einnehmen. Bei kleinerem Bedienpersonal kann der Winkel α reduziert werden, um sicherzustellen, dass die Hände des Bedieners nicht dauerhaft in einer zu hohen Arbeitsposition sind. Wenn die Produktentnahme mittels Rauchstock, wie in Fig. 17 gezeigt ist, auf der Rückseite der Führungsschiene bzw. der Aufhängeeinheit erfolgt, stört eine niedrige Arbeitshöhe Y nicht und der Rauchstock kann einfach in die Wurstschlaufen eingeführt werden, damit eine bestimmte Wurstgruppe entnommen werden kann.

Eine Verstellung kann beispielsweise stufenlos erfolgen, indem die Führungsschiene verschwenkt wird und mittels einer Klemmeinrichtung fixiert wird. Auch eine stufenweise Einstellung, z. B. durch Arretierung der Führungsschiene über Bolzen in vorgegebenen Lochabständen ist möglich.

Es ist vorteilhaft, dass der Bediener zur Produktentnahme weiterhin im Wesentlichen die gesamte Länge auf der Rückseite und 70% - 90% der Gesamtlänge der Führungsschiene auf der Vorderseite der Aufhängeeinheit als Arbeitsbereich zur Verfügung hat. Dies liegt daran, dass der Höhenunterschied bei der Hakenbewegung von der Vorderseite der Führungsschiene auf die Rückseite der Führungsschiene quer zur Transportrichtung umgesetzt wird.

Das Antriebselement 5 wird zusammen mit der Führungsschiene 2 und den daran angeordneten Haken 3 schräg gestellt.

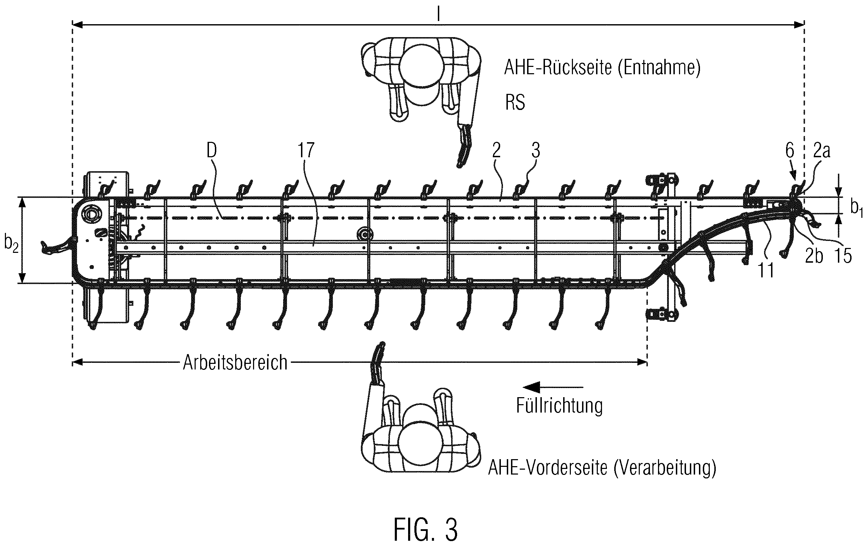

Fig. 3 zeigt eine Aufsicht auf das in Fig. 1 und 2 gezeigte Ausführungsbeispiel. Die geschlossene Führungsschiene 2 weist an ihrem der Abdrehlinie zugewandten Ende einen Umlenkbereich 6 auf. Der Umlenkbereich lenkt die Haken bei der in Fig. 3 gezeigten Ausführungsform um 180° um. Im Umlenkbereich 6 nimmt der jeweilige Haken 3 eine Wurstschlaufe auf und transportiert sie weiter zur Vorderseite VS . Der Abstand b₁ eines Führungsschienenabschnitts 2a auf der Rückseite RS zum Führungsschienenabschnitt 2b auf der Vorderseite VS unmittelbar vor und nach dem Umlenkbereich ist kleiner als der entsprechende Abstand b₂ der gegenüberliegenden Abschnitte in einem nachfolgenden Arbeitsbereich.

In Fig. 3 ist der Abstand als Lot von dem Führungsschienenabschnitt 2b auf einen Punkt auf dem Führungsschienenabschnitt 2a direkt vor dem Anfang des Umlenkbereichs 6 gezeigt. Der Abstand b₁ nimmt auf den Abstand b₂ zu, wobei nach dem Umlenkbereich 6 in diesem Ausführungsbeispiel der gekrümmte, radiusförmige, hier konkav gekrümmte Abschnitt 11 vorgesehen ist. Der Krümmungsradius liegt beispielsweise in einem Bereich von 400 mm bis 1000 mm. Zwischen dem gekrümmten Abschnitt 11 und dem Umlenkbereich 6 kann beispielsweise auch noch ein gerader Führungsschienenabschnitt, beispielsweise parallel zur Führungsschiene auf der Vorderseite vorgesehen sein. Hier schließt der Abschnitt 11 direkt an den Umlenkbereich 6 an. Die Breite b1 liegt beispielsweise in einem Bereich von 50 mm bis 100 mm, z. B. 60 mm. Der Abstand der gegenüberliegenden Führungsschienenabschnitte erweitert sich auf einen Bereich b2 von 300 mm bis 600 mm, insbesondere 350 mm bis 450 mm.

Trotz der Erhöhung der Arbeitshöhe auf der Vorderseite der Aufhängeeinheit 1 gibt es einen sehr großer Arbeitsbereich im Anschluss an den sich erweiterten, hier gekrümmten, Abschnitt 11, beispielsweise mit einer Länge von 500 mm bis 700 mm bei einer Gesamtlänge I der Führungsschiene 2 von 2000 mm bis 4500 mm. Der Arbeitsbereich auf der Vorderseite liegt in einem Bereich von 70% - 90%.

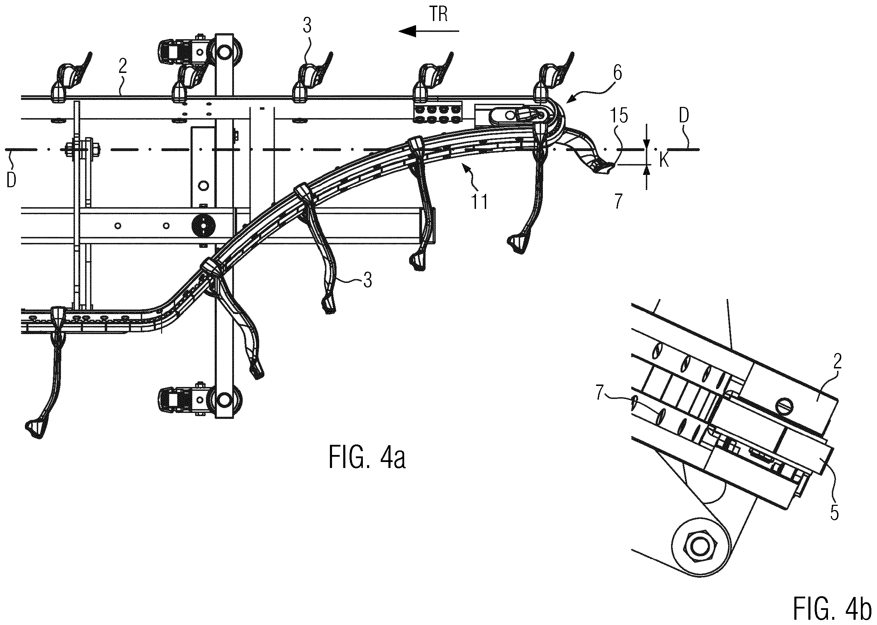

Wird ein gekrümmter Abschnitt 11, wie in Fig. 3 gezeigt, verwendet, so ist es, wie insbesondere aus den Fig. 4a und 4b hervorgeht, möglich, mindestens ein Rückhalteelement, hier Rückhalteleisten 7 vorzusehen, die das umlaufende Antriebselement 5 an der Führungsschiene 2 hält, da ansonsten, z. B. bei Umbestückung der Haken oder bei großem Gruppenabstand, das umlaufende Antriebselement sehnenförmig von der Führungsschiene abstehen würde. Die beiden Rückhalteleisten 7 in Fig. 4b sind vorteilhafterweise L-förmig und greifen in Aussparungen (beispielsweise oben und unten) des Antriebselements, ein und halten das Antriebselement 5 so zurück. Gleichzeitig sind die Rückhalteleisten 7 an der Führungsschiene 2 befestigt. Das Antriebselement kann an der Rückhalteleiste vorbeigleiten.

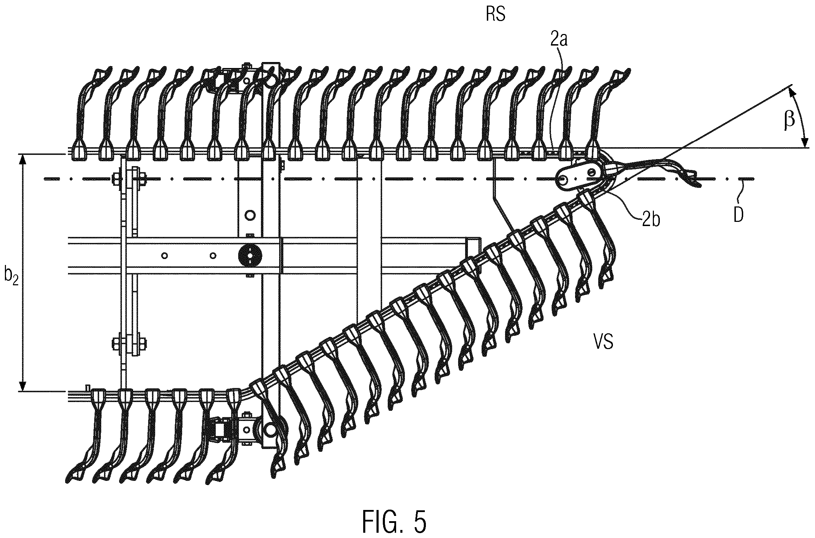

Es ist auch möglich, dass in dem Umlenkbereich 6 die Haken um einen Winkel <180°, beispielsweise 95 - 180°, vorzugsweise 160 - 180°umgelenkt werden, wie in Fig. 5 dargestellt ist. Dann kann ein Führungsschienenabschnitt 2a auf der Rückseite sowie ein Führungsschienenabschnitt 2b auf der Vorderseite so angeordnet werden, dass die Abschnitte unter einem spitzen Winkel β auf den Umlenkbereich 6 zulaufen, wobei der Winkel β in einem Bereich von 5 - 85°, vorzugsweise zwischen 15 und 45° liegt, und der geneigte Abschnitt 2b so lang gewählt ist, bis die gewünschte Breite b₂ erzielt wird.

In den Fig. 1 - 7 ist die jeweilige Drehachse D dargestellt. Die Drehachse verläuft, wie aus den Figuren hervorgeht, näher an der Rückseite RS der Führungsschiene 2. Vorteilhafterweise erstreckt sich die Drehachse parallel zur Längsachse der Aufhängeeinheit 1, d. h., parallel zur Transportrichtung TR, die wiederum der Füllrichtung der Füllmaschine bzw. der Transportrichtung der Abdrehlinie entspricht. Vorzugsweise liegt die Drehachse D in einer Ebene, die von einem Vektor aufgespannt wird, der sich im Wesentlichen parallel zur Transportrichtung TR erstreckt und einem Vektor, der sich senkrecht zur Oberseite bzw. Oberfläche der geschlossenen Führungsschiene, insbesondere im Umlenkbereich, erstreckt. Diese Fläche ist, wenn beispielsweise α = 0, eine Horizontalfläche, ansonsten eine Fläche, die um den Winkel α zur Horizontalfläche geneigt ist. Wenn die Drehachse D näher an der Rückseite der Führungsschiene 2 angeordnet ist als an der Vorderseite, ist die Relativbewegung der Führungsschiene 2 auf der Rückseite geringer als die Relativbewegung der Führungsschiene auf der Vorderseite. Dies ist insbesondere vorteilhaft, da der Umlenkbereich 6 von der Rückseite der Führungsschiene aus beginnt und eine relativ schmale Abmessung aufweist, sodass dieser Bereich beim Verschwenken relativ lagekonstant bleibt, was zur zuverlässigen Übernahme der Wurstschlaufen vorteilhaft ist. Die Drehachse befindet sich oberhalb des Fahrgestells 4 und vorzugsweise ist der Abstand der Drehachse zu einer virtuellen Fläche bzw. Ebene, die durch die Unterkanten der Führungsschiene aufgespannt wird, 10 mm-150 mm.

Es ist ganz besonders vorteilhaft, wenn die Hakenspitze 15, wenn sie in einer Übernahmeposition im Umlenkbereich ist, wie beispielsweise in Fig. 3, 4 und 5 dargestellt ist, einen möglichst geringen Abstand zur Drehachse aufweist, insbesondere einen Abstand k < =ca. 50 mm, wie beispielsweise in Fig. 4a angedeutet ist. Als Abstand ist hier das Lot der Spitze auf die Drehachse definiert. Somit ist gewährleistet, dass die Spitze des Hakens möglichst ortsfest ist - auch bei Veränderung des Schwenkwinkels α - und ein sicherer Betrieb gewährleistet wird.

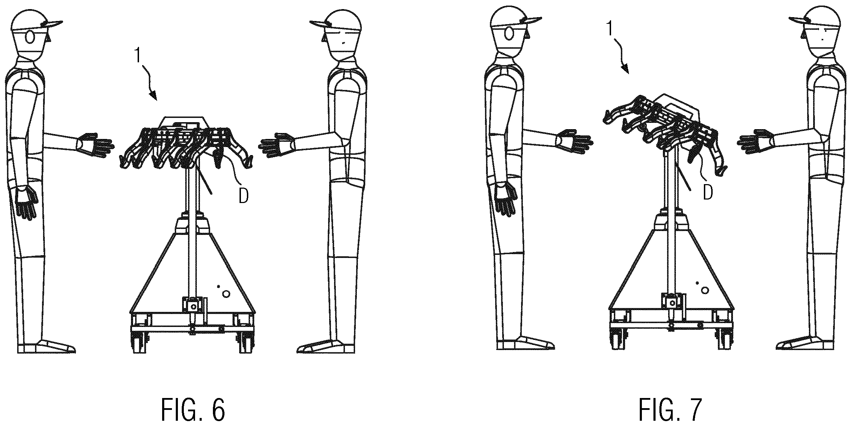

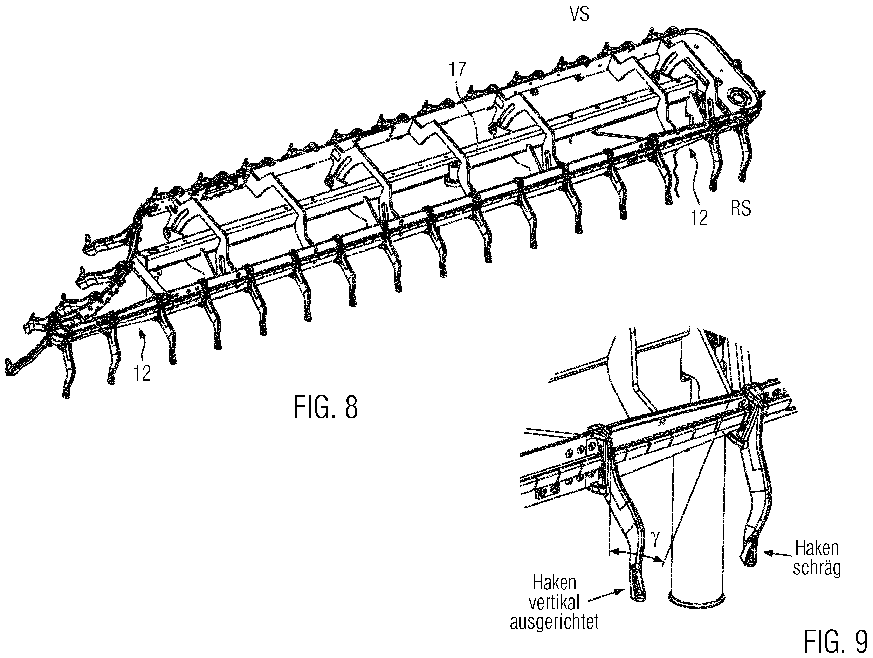

Wie aus Fig. 6 und 7 hervorgeht, kann also die Führungsschiene zusammen mit dem Antriebselement 5 und den Haken 3 um den Winkel α verschwenkt werden und an die individuelle Größe eines Bedieners angepasst werden. Mit der Führungsschiene wird dann auch die Hakenposition verändert, d. h. verschwenkt. Insbesondere an der Rückseite werden die Haken nach unten verschwenkt, sodass diese nicht mehr ordentlich vertikal ausgerichtet sind, beispielsweise der Führungsabschnitt 14 nicht mehr vertikal angeordnet ist, sondern wie die Führungsschiene um den Winkel α verschwenkt. Sind die Haken nicht ordnungsgemäß geneigt, das bedeutet, dass die Abteilstellen der Würste nicht ordnungsgemäß zwischen den Armen 22 und 21 liegen, werden die Schlaufen nicht ausreichend gespreizt und können schlecht mit dem Rauchstock abgenommen werden. Eine Möglichkeit besteht darin, zwei oder mehrere verdrillte Führungsschienenabschnitte 12 vorzusehen, wie in Fig. 8 und 9 gezeigt ist. Dabei wird beispielsweise auf der Rückseite die Führungsschiene verdrillt. Vorzugsweise wird die Führungsschiene zwischen Anfang und Ende der Rückseite der um einen Drehwinkel +y und -y verdrillt, derart, dass die Schrägstellung der Führungsschiene bzw. die Hakenposition ganz oder teilweise ausgeglichen ist. Das heißt, dass die Haken wieder in eine Position gebracht werden, die einer Hakenposition entspricht, bei α = 0 ± 10°.

Es ist auch möglich die Haken so zu konstruieren, dass sie bei einer Verschwenkung der Führungsschiene 2 in einem bestimmten Winkelbereich korrekt ausgerichtet sind und die Würste ausreichend spreizen.

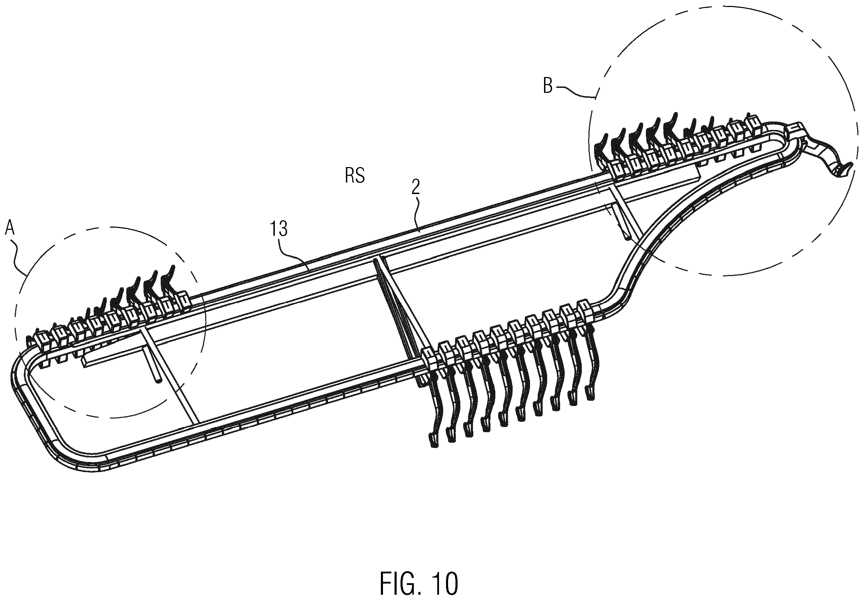

In Fig. 10 - 16 ist eine alternative Art und Weise gezeigt, wie die Haken auf der Rückseite in eine korrekte Position , insbesondere in eine vertikale Position des Führungsabschnitts, gebracht werden können.

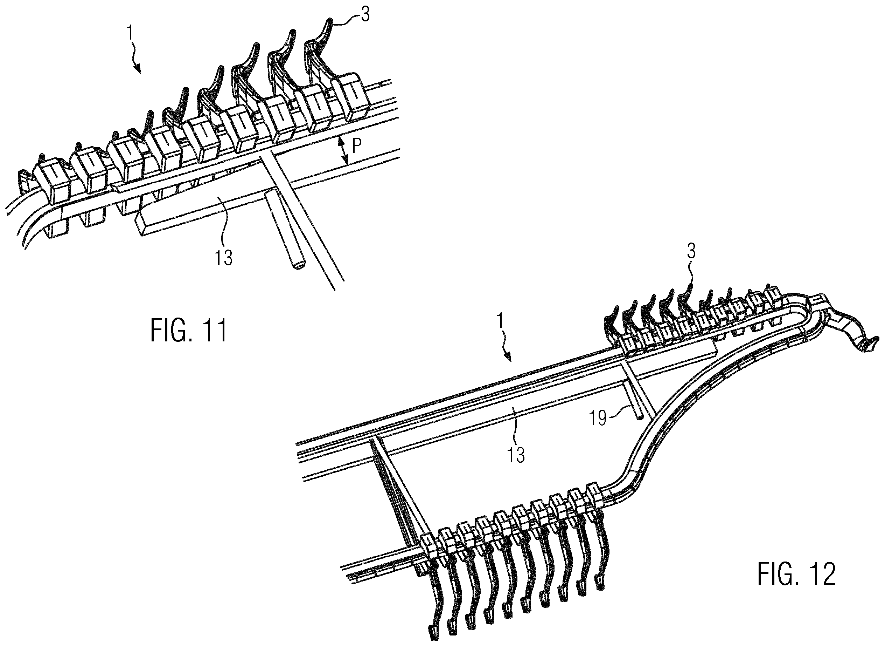

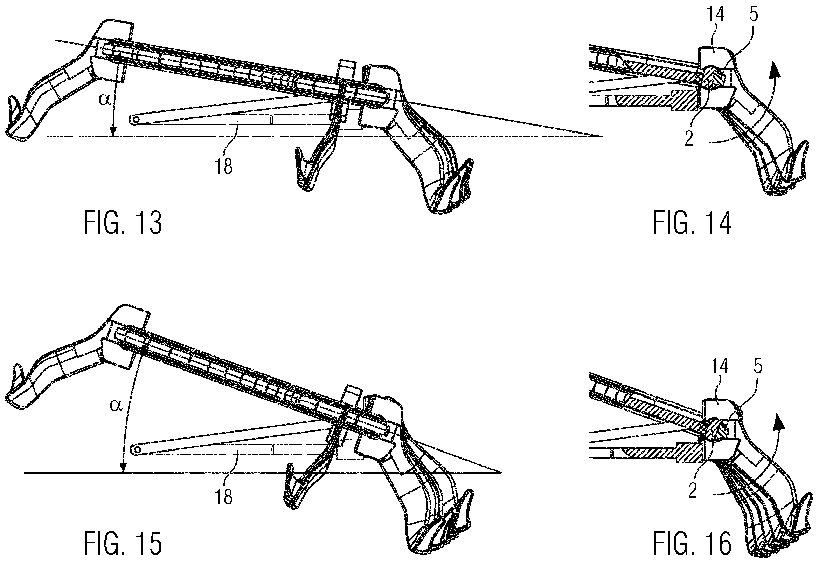

Fig. 10 zeigt die Zusatzführung 13, die hier z. B. parallel zur Führungsschiene 2 im Bereich der Rückseite angeordnet ist. Die Schiene 13 befindet sich, wie insbesondere auch aus der Fig. 11 hervorgeht, in einem neben dem Führungsbereich 14 der Haken 3 angeordneten Bereich auf der Innenseite der Führungsschiene. Ist die Führungsschiene 2 beispielsweise horizontal ausgerichtet, befindet sich beispielsweise der Führungsbereich 14 des Hakens in einer korrekten vertikalen Position bzw. die Arme des Hakens sind in einer korrekten Aufnahmeposition . Wird, wie aus Fig. 13 und 14 hervorgeht, die Führungsschiene 2 um einen Winkel α verschwenkt, so drückt die Zusatzführung 13 auf den Führungsbereich 14 der Haken 3 derart, dass der drehbar um eine entsprechend ausgebildete Führungsschiene 2 gelagerte Haken nach oben verschwenkt wird und zwar um einen Winkel, der im Wesentlichen dem Winkel α ± 10° entspricht.

Fig. 13 und 14 zeigen eine Ansicht bei einem Schwenkwinkel von 10°. Fig. 15 und 16 zeigen eine Ansicht bei einem Schwenkwinkel von 20°. Wie beim Vergleich der Figuren hervorgeht, gibt es eine mechanische Verbindung bzw. Koppelung 18 zwischen der Zusatzführung 13 und der Führungsschiene 2, derart, dass die Position der Zusatzführung 13 automatisch mit der Schwenkbewegung der Führungsschiene eingestellt wird. Wird die Führungsschiene 2 um den Winkel α in eine Richtung bzw. wieder zurück geschwenkt, so bewegt sich die Zusatzleiste 13 zu den Haken oder in eine entgegengesetzte Richtung.

Bei einer entsprechenden Ausführungsform können dann, wie insbesondere aus Fig. 10 und 11 hervorgeht, sich die Haken entlang der Zusatzführung 13 bzw. der Zusatzleiste 13 bewegen. Die Breite p der Zusatzführung 13 nimmt entgegen Transportrichtung TR kontinuierlich zu, sodass die Haken nicht schlagartig gedreht werden, sondern allmählich nach oben verschwenken bis zu einer maximalen Position. Im Gegensatz zu den vorherigen Ausführungsbeispielen ist die Führungsschiene 2 hier beispielsweise zylindrisch ausgebildet ist, damit der Führungsbereich 14 der Haken drehbar gelagert werden kann. Auch läuft das Antriebselement 5 zwischen Führungsschiene 2 und Haken 3. Die Haken können dann, wie aus den Fig. 10 - 12 hervorgeht, in einer nach oben verschwenkten Position auf der Rückseite RS der Führungsschiene 2 laufen und am Ende der Führungsschiene 2 auf der Rückseite RS wieder nach unten verschwenkt werden, da hier die Zusatzführung 13 endet. Hier ist es nicht notwendig, dass die Breite p der Zusatzführung allmählich abnimmt, da in diesem Bereich die Wurstschlaufen bereits entnommen sind. Zwar ist eine automatische Einstellung der Hakenposition über die mechanische Kopplung vorteilhaft, es ist jedoch auch möglich, dass beispielsweise über einen Bolzen 19 die Zusatzführung entsprechend vom Bediener eingestellt und fixiert wird.

## Patentansprüche

1. Aufhängeeinheit (1) zum Aufnehmen und Transportieren von Wurstschlaufen mit um eine Führungsschiene (2) umlaufenden Haken (3), wobei die Führungsschiene (2) eine längliche Vorderseite (VS) und eine gegenüberliegende Rückseite (RS) aufweist, wobei
die Führungsschiene (2) derart zu einer horizontalen Ebene schräg gestellt ist, dass die Vorderseite (VS) auf einem höheren Niveau liegt als die Rückseite (RS), und die Führungsschiene (2) um eine Drehachse (D) um einen Winkel (a) verschwenkbar ist.

2. Aufhängeeinheit nach Anspruch 1, **dadurch gekennzeichnet, dass** an der Führungsschiene (2) ein Antriebselement (5), insbesondere ein Antriebsriemen (5) angeordnet ist, das zusammen mit der Führungsschiene (2) schräg gestellt ist.

3. Aufhängeeinheit (1) nach Anspruch 1 oder 2, **dadurch gekennzeichnet, dass** die Führungsschiene drehbar auf einem Fahrgestell (4) gelagert ist, wobei die Drehachse (D) vorzugsweise im Wesentlichen parallel zur Längsachse der Aufhängeeinheit (1) verläuft, insbesondere im Wesentlichen parallel zur Transportrichtung (TR).

4. Aufhängeeinheit (1) nach mindestens einem der vorhergehenden Ansprüche, **dadurch gekennzeichnet, dass** das Höhenniveau der Vorderseite (VS) der Führungsschiene (2) stufenlos oder in diskreten Abständen verstellbar ist.

5. Aufhängeeinheit (1) nach Anspruch 1, **dadurch gekennzeichnet, dass** der Schwenkwinkel α in einem Bereich von 0° - 85° liegt, insbesondere in einem Bereich von 5° - 30°.

6. Aufhängeeinheit (1), nach mindestens einem der vorhergehenden Ansprüche, **dadurch gekennzeichnet, dass** die Führungsschiene (2) an einem ersten Ende einen Umlenkbereich (6) aufweist, in dem die Haken (3) von 95° - 180°, insbesondere 160°-180°, vorzugsweise um 180° umgelenkt werden, wobei die Haken im Umlenkbereich (6) die Abteilstellen der Wurstketten aufnehmen.

7. Aufhängeeinheit (1) nach mindestens einem der Ansprüche 1 - 6, **dadurch gekennzeichnet, dass** der Abstand (b₁) eines Führungsschienenabschnitts (2b) auf der Vorderseite (VS) unmittelbar vor dem Umlenkbereich (6) von einem Führungsschienenabschnitt (2b) auf der Rückseite (RS) unmittelbar nach dem Umlenkbereich (6) kleiner ist als der Abstand (b₂) in einem in Transportrichtung (TR) nachfolgenden Bereich, wobei insbesondere der Abstand (b₁) in einem Bereich von 50 mm - 100 mm liegt und der Abstand b₂ in dem nachfolgenden Bereich bis auf 300 mm - 600 mm zunimmt.

8. Aufhängeeinheit (1) nach mindestens Anspruch 7, **dadurch gekennzeichnet, dass** die Führungsschiene (2) und/oder zumindest jeweilige Führungsschienenabschnitte (2a, 2b) auf der Vorderseite und Rückseite unter einem spitzen Winkel zwischen 5° - 85°, vorzugsweise zwischen 15° und 45 auf den Umlenkbereich (6) zulaufen derart, dass sich der Abstand (b₁) auf einen Abstand (b₂) erweitert, und
vorzugsweise auf der Vorderseite nach dem Umlenkbereich (6) ein schräg zur Transportrichtung verlaufender Führungsschienenabschnitt (2b) angeordnet ist.

9. Aufhängeeinheit nach mindestens Anspruch 7, **dadurch gekennzeichnet, dass** ein konkav gekrümmter Führungsschienenabschnitt (11) nach dem Umlenkbereich (6) auf der Vorderseite angeordnet ist, derart, dass sich der Abstand (b₁) auf einen Abstand (b₂) erweitert.

10. Aufhängeeinheit nach Anspruch 9, **dadurch gekennzeichnet, dass** Rückhalteelemente, insbesondere Rückhalteleisten (7) das umlaufende Antriebselement (5) an der Führungsschiene (2) halten.

11. Aufhängeeinheit (1) nach mindestens einem der Ansprüche 1 - 10, **dadurch gekennzeichnet, dass** die Drehachse (D) in einer Ebene liegt, die von einem Vektor aufgespannt wird, der sich im Wesentlichen parallel zur Transportrichtung (TR) erstreckt, und einem Vektor, der sich senkrecht zu der Oberseite der geschlossenen Führungsschiene (2) erstreckt und der näher an der Rückseite der Führungsschiene (2) als an der Vorderseite der Führungsschiene verläuft, insbesondere senkrecht durch eine Oberseite der Führungsschiene im Umlenkbereich (6) und vorzugsweise der Abstand der Drehachse zu einer Ebene , die durch die Unterkanten der Führungsschiene aufgespannt wird 10 mm - 150 mm beträgt.

12. Aufhängeeinheit (1) nach mindestens einem der Ansprüche 1 - 11, **dadurch gekennzeichnet, dass** sich die Drehachse im Wesentlichen parallel zur Transportrichtung (TR) erstreckt und der Abstand (K) der Hakenspitze (15) in einer Übernahmeposition im Umlenkbereich (6) eines im Wesentlichen L-förmigen Hakens (3) zur Drehachse D < = 50 mm ist.

13. Aufhängeeinheit nach mindestens einem der Ansprüche 1 - 12, **dadurch gekennzeichnet, dass** die Vorrichtung eine Einrichtung (13) umfasst, die die Position der Haken (2) zusätzlich ändert, insbesondere, um einen Winkel (a) von 5° - 30° verschwenkt, und die Haken vorzugsweise bei einer um einen Winkel (a) verschwenkte Position der Führungsschiene (2) in eine Position bringen kann, die im Wesentlichen einer Hakenposition bei a = 0° ± 10° entspricht, wobei die Haken vorzugsweise drehbar an der Führungsschiene gelagert sind.

14. Aufhängeeinheit nach mindestens einem der Ansprüche 1 - 13, **dadurch gekennzeichnet, dass** die Einrichtung eine Zusatzführung (13) aufweist, die bei verschwenkter Führungsbahn (2) gegen einen Führungsbereich (14) der Haken (3) drücken kann, insbesondere derart, dass die Haken (3) auf der Rückseite der Führungsschiene nach oben verschwenkbar sind und dass vorzugsweise die Führungsbahn (2) mechanisch mit der Zusatzführung (13) gekoppelt ist.

15. Aufhängeeinheit nach mindestens einem der vorhergehenden Ansprüche, **dadurch gekennzeichnet, dass** die Führungsschiene (2) zumindest abschnittsweise verdrillt wird, insbesondere um einen Winkel (γ), wobei vorzugsweise γ = α ± 10°.

16. Verfahren zum Aufhängen von Wurstschlaufen auf eine Aufhängeeinheit (1) nach mindestens einem der Ansprüche 1 - 15, **wobei** die Abteilstellen der Wurstketten in einem Umlenkbereich (6) der Aufhängeeinheit (1) von den Haken (3) übernommen werden, dann nach dem Umlenkbereich (6) gleichzeitig in Transportrichtung (TR), nach oben und quer zur Transportrichtung (TR) bewegt werden, und wobei die Führungsschiene (2), auf der die Haken (3) laufen, um eine Drehachse (D) um einen Winkel (a) verschwenkt wird, wodurch das Höhenniveau, auf dem die Führungsschiene (2) auf der Vorderseite (VS) liegt, eingestellt und dann fixiert wird.

17. Verfahren nach Anspruch 16, **dadurch gekennzeichnet, dass** auf der erhöhten Vorderseite der Führungsschiene (2) eine Produktverarbeitung und/oder Entnahme der Wurstschlaufen mit einem Rauchstock stattfindet und auf der hinteren Rückseite die Entnahme der Wurstschlaufen mit einem Rauchstock (16) stattfindet.

18. Füllmaschine mit einer Abdrehlinie sowie einer Aufhängeeinheit (1) nach mindestens einem der Ansprüche 1 bis 15.

## Claims

1. Suspension unit (1) for taking up and transporting sausage loops with hooks (3) circulating around a guide rail (2), where said guide rail (2) has an elongate front side (VS) and an oppositely disposed rear side (RS), wherein
said guide rail (2) is inclined relative to a horizontal plane such that said front side (VS) is at a higher level than said rear side (RS) and said guide rail (2) is pivotable about an axis of rotation (D) by an angle (α).

2. Suspension unit according to claim 1, **characterized in that** a drive element (5), in particular a drive belt (5), is arranged at said guide rail (2) and inclined together with said guide rail (2).

3. Suspension unit (1) according to claim 1 or 2, **characterized in** the guide rail (2) is rotatably mounted on a chassis (4), where said axis of rotation (D) preferably runs substantially parallel to the longitudinal axis of said suspension unit (1), in particular substantially parallel to the direction of transport (TR).

4. Suspension unit (1) according to at least one of the preceding claims, **characterized in that** the height level of said front side (VS) of said guide rail (2) is adjustable steplessly or at discrete intervals.

5. Suspension unit (1) according to claim 1 , **characterized in that** said pivot angle α is in a range from 0° - 85°, in particular in a range from 5° - 30°.

6. Suspension unit (1) according to at least one of the preceding claims, **characterized in that** said guide rail (2) at a first end comprises a deflection region (6) in which said hooks (3) are deflected by 95° - 180°, in particular 160° - 180°, preferably by 180°, where said hooks in said deflection region (6) take up the separation points of the sausage chains.

7. Suspension unit (1) according to at least one of the claims 1 - 6, **characterized in that** the distance (b₁) of a guide rail section (2b) at said front side (VS) immediately upstream of said deflection region (6) from a guide rail section (2b) at said rear side immediately downstream of said deflection region (6) is smaller than the distance (b₂) in a region that is in the direction of transport (TR) downstream, where in particular distance (b₁) is in a range from 50 mm - 100 mm and distance b₂ in the downstream region increases up to 300 mm to 600 mm.

8. Suspension unit (1) according to at least claim 7, **characterized in that** said guide rail (2) and/or at least respective guide rail sections (2a, 2b) at said front and rear side converge toward said deflection region (6) at an acute angle between 5° - 85°, preferably between 15° and 45°, such that said distance (b₁) widens to a distance (b₂), and
preferably a guide rail section (2b) extending obliquely relative to the direction of transport is arranged at said front side downstream of said deflection region (6).

9. Suspension unit according to at least claim 7, **characterized in that** a concavely curved guide rail section (11) is arranged downstream of said deflection region (6) on said front side, such that said distance (b₁) widens to a distance (b₂).

10. Suspension unit according to claim 9, **characterized in that** retaining elements, in particular retaining strips (7), hold said revolving drive element (5) at said guide rail (2).

11. Suspension unit (1) according to at least one of the claims 1 - 10, **characterized in that** said axis of rotation (D) is in a plane which is spanned by a vector which extends substantially parallel to the direction of transport (TR) and a vector which extends perpendicular to the upper side of said closed guide rail (2) and which extends closer to said rear side of said guide rail (2) than at said front side of said guide rail, in particular perpendicularly through an upper side of said guide rail in said deflection region (6), and the distance of said axis of rotation from a plane that is spanned by the lower edges of said guide rail is 10 mm - 150 mm.

12. Suspension unit (1) according to at least one of the claims 1 - 11, **characterized in that** said axis of rotation extends substantially parallel to said direction of transport (TR) and said distance (K) of said hook tip (15) in a transfer position in said deflection region (6) of a substantially L-shaped hook (3) from said axis of rotation D is <= 50 mm.

13. Suspension unit according to at least one of the claims 1 - 12, **characterized in that** said device comprises an apparatus (13) which additionally changes the position of said hooks (2), in particular, pivots it by an angle (α) of 5° - 30°, and, preferably at a position of said guide rail (2) pivoted by an angle (α), can take said hooks to a position which corresponds substantially to hook position at a = 0° ± 10°, where said hooks are preferably rotatably mounted at said guide rail.

14. Suspension unit according to at least one of the claims 1 - 13, **characterized in that** said apparatus comprises an additional guide (13) which, when said guide track (2) is pivoted, can press against a guide region (14) of said hooks (3), in particular such that said hooks (3) at said rear side of said guide rail can be pivoted upwardly and that said guide track (2) is preferably mechanically coupled to said additional guide (13).

15. Suspension unit according to at least one of the preceding claims, **characterized in that** said guide rail (2) is at least in sections twisted, in particular, by an angle (γ), where preferably γ = α ± 10°.

16. Method for suspending sausage loops on a suspension unit (1)according to at least one of the claims 1 - 15, wherein said separation points of said sausage chains are received in a deflection region (6) of said suspension unit (1) by said hooks (3), are then downstream of said deflection region (6) moved simultaneously in said direction of transport (TR) upwardly and transversely to said direction of transport (TR) and wherein
said guide rail (2), on which said hooks (3) run, is pivoted about an axis of rotation (D) by an angle (α), whereby the height level, at which said guide rail (2) is at said front side (VS), is adjusted and then locked.

17. Method according to claim 16, **characterized in that** product processing and/or the removal of said sausage loops with a smoke stick takes place at the raised front side of said guide rail (2) and the removal of the sausage loops with a smoke stick (16) at the rear side.

18. Stuffing machine with a linking line and a suspension unit (1) according to at least one of the claims 1 to 15.

## Revendications

1. Unité de suspension (1) permettant d'accueillir et de transporter des boucles de saucisses avec des crochets (3) entourant un rail de guidage (2), dans lequel le rail de guidage (2) présente un côté avant (VS) oblique et un côté arrière (RS) opposé, **dans laquelle**
le rail de guidage (2) est incliné par rapport à un plan horizontal de telle manière que le côté avant (VS) se situe à un niveau plus élevé que le côté arrière (RS), et le rail de guidage (2) peut être pivoté autour d'un axe de rotation (D) selon un angle (α).

2. Unité de suspension selon la revendication 1, **caractérisée en ce qu'un** élément d'entraînement (5), en particulier une courroie d'entraînement (5), incliné en commun avec le rail de guidage (2), est agencé au niveau du rail de guidage (2).

3. Unité de suspension (1) selon la revendication 1 ou 2, **caractérisée en ce que** le rail de guidage est monté rotatif sur un châssis (4), dans laquelle l'axe de rotation (D) s'étend de manière préférée de manière essentiellement parallèle à l'axe longitudinal de l'unité de suspension (1), en particulier de manière essentiellement parallèle au sens de transport (TR).

4. Unité de suspension (1) selon au moins l'une quelconque des revendications précédentes, **caractérisée en ce que** le niveau de hauteur du côté avant (VS) du rail de guidage (2) peut être réglé de manière continue ou avec des espacements discrets.

5. Unité de suspension (1) selon la revendication 1, **caractérisée en ce que** l'angle de pivotement α se situe dans la plage comprise entre 0° et 85°, en particulier dans une plage comprise entre 5° et 30°.

6. Unité de suspension (1) selon au moins l'une quelconque des revendications précédentes, **caractérisée en ce que** le rail de guidage (2) présente, au niveau d'une première extrémité, une région de déviation (6) au sein de laquelle les crochets (3) sont déviés de 95° à 180°, en particulier de 160° à 180°, de manière préférée de 180°, dans laquelle les crochets accueillent les points de division des chaînes de saucisses dans la région de déviation (6).

7. Unité de suspension (1) selon au moins l'une quelconque des revendications 1 à 6, **caractérisée en ce que** l'espacement (b₁) présent entre une section de rail de guidage (2b) sur le côté avant (VS) immédiatement avant la région de déviation (6) et une section de rail de guidage (2b) sur le côté arrière (RS) immédiatement après la région de déviation (6) est inférieur à l'espacement (b₂) présent dans une région consécutive dans le sens de transport (TR), dans laquelle l'espacement (b₁) se situe en particulier dans une plage comprise entre 50 mm et 100 mm et l'espacement b₂ dans la région consécutive augmente jusqu'à être compris entre 300 mm et 600 mm.

8. Unité de suspension (1) selon au moins la revendication 7, **caractérisée en ce que** le rail de guidage (2) et/ou au moins des sections de rail de guidage (2a, 2b) respectives s'étendent sur le côté avant et le côté arrière jusqu'à la région de déviation (6) avec un angle aigu compris entre 5° et 85°, de manière préférée compris entre 15° et 45°, de telle manière que l'espacement (b₁) s'accroit jusqu'à un espacement (b2), et
une section de rail de guidage (2b) s'étendant de manière oblique par rapport au sens de transport est agencée de manière préférée sur le côté avant après la région de déviation (6).

9. Unité de suspension selon au moins la revendication 7, **caractérisée en ce qu'**une section de rail de guidage à courbure concave (11) est agencée sur le côté avant après la région de déviation (6) de telle manière que l'espacement (b₁) s'accroit jusqu'à un espacement (b2).

10. Unité de suspension selon la revendication 9, **caractérisée en ce que** des éléments de retenue, en particulier des baguettes de retenue (7), maintiennent sur le rail de guidage (2) l'élément d'entraînement (5) en train de circuler.

11. Unité de suspension (1) selon au moins l'une quelconque des revendications 1 à 10, **caractérisée en ce que** l'axe de rotation (D) se situe dans un plan qui est engendré par un vecteur s'étendant de manière essentiellement parallèle au sens de transport (TR) et un vecteur s'étendant de manière perpendiculaire au côté supérieur du rail de guidage (2) fermé et qui s'étend plus près au niveau du côté arrière du rail de guidage (2) qu'au niveau du côté avant du rail de guidage, en particulier de manière perpendiculaire à travers un côté supérieur du rail de guidage dans la région de déviation (6), et l'espacement de l'axe de rotation par rapport à un plan engendré par les bords inférieurs du rail de guidage est de manière préférée compris entre 10 mm et 150 mm.

12. Unité de suspension (1) selon au moins l'une quelconque des revendications 1 à 11, **caractérisée en ce que** l'axe de rotation s'étend de manière essentiellement parallèle au sens de transport (TR), et l'espacement (K) entre la pointe de crochet (15), dans une position de prise en charge dans la région de déviation (6) d'un crochet (3) essentiellement en forme de L, et l'axe de rotation D est inférieur ou égal à 50 mm.

13. Unité de suspension selon au moins l'une quelconque des revendications 1 à 12, **caractérisée en ce que** le dispositif comprend un appareil (13) qui modifie de manière supplémentaire la position des crochets (2), en particulier les fait pivoter d'un angle (a) compris entre 5° et 30°, et peut amener les crochets, qui se trouvent de manière préférée dans une position du rail de guidage (2) pivoté d'un angle (a), jusqu'à une position correspondant essentiellement à une position de crochet pour laquelle α = 0° ± 10°, dans laquelle les crochets sont de manière préférée montés rotatifs au niveau du rail de guidage.

14. Unité de suspension selon au moins l'une quelconque des revendications 1 à 13, **caractérisée en ce que** l'appareil présente un guide supplémentaire (13) qui, lorsque le rail de guidage (2) est pivoté, peut presser contre une région de guidage (14) des crochets (3), en particulier de telle manière que les crochets (3) peuvent être pivotés sur le côté arrière du rail de guidage et de telle manière que le rail de guidage (2) est de manière préférée couplé mécaniquement au guide supplémentaire (13).

15. Unité de suspension selon au moins l'une quelconque des revendications précédentes, **caractérisée en ce que** le rail de guidage (2) est vrillé au moins par sections, en particulier selon un angle (γ), dans laquelle γ est de manière préférée égal à α ± 10°.

16. Procédé permettant de suspendre des boucles de saucisses sur une unité de suspension (1) selon au moins l'une quelconque des revendications 1 à 15, **dans lequel** les points de division des chaînes de saucisses dans une région de déviation (6) de l'unité de suspension (1) sont pris en charge par les crochets (3), puis, après la région de déviation (6), sont déplacés simultanément dans le sens de transport (TR) ainsi que vers le haut et de manière perpendiculaire au sens de transport (TR), et dans lequel le rail de guidage (2) sur lequel passent les crochets (3) est pivoté autour d'un axe de rotation (D) selon un angle (a), ce qui ajuste puis établit le niveau de hauteur auquel se situe le rail de guidage (2) sur le côté avant (VS).

17. Procédé selon la revendication 16, **caractérisé en ce qu'**un traitement de produit et/ou un retrait des boucles de saucisses avec une barre à fumer a lieu sur le côté avant surélevé du rail de guidage (2) et le retrait des boucles de saucisses avec une barre à fumer (16) a lieu sur le côté arrière.

18. Machine de remplissage munie d'une ligne de torsadage et d'une unité de suspension (1) selon au moins l'une quelconque des revendications 1 à 15.
